# EUROPÄISCHE PATENTSCHRIFT

(11) **EP 3 592 964 B1**
(45) Veröffentlichungstag und Bekanntmachung des Hinweises auf die Patenterteilung: **04.10.2023**
(21) Anmeldenummer: 18701728.0
(22) Anmeldetag: 24.01.2018
(51) Int. Cl.: F02M 25/025, F02M 25/022, F02B 47/02

(54) **VORRICHTUNG ZUR BEIMISCHUNG EINES FLUIDS IN EINE VERBRENNUNGSLUFT EINER BRENNKRAFTMASCHINE**
DEVICE FOR ADDING A FLUID TO A COMBUSTION AIR OF AN INTERNAL COMBUSTION ENGINE
DISPOSITIF POUR AJOUTER UN FLUIDE A L'AIR DE COMBUSTION D'UN MOTEUR A COMBUSTION INTERNE

(30) Priorität: 09.03.2017 DE 102017203927
(43) Veröffentlichungstag der Anmeldung: 15.01.2020
(73) Patentinhaber: Bayerische Motoren Werke Aktiengesellschaft, 80809 München (DE)
(72) Erfinder: HUSSMANN, Björn, 81375 München (DE)
(86) Internationale Anmeldenummer: PCT/EP2018/051624
(87) Internationale Veröffentlichungsnummer: WO 2018/162139

(56) Entgegenhaltungen:
- EP-A1- 3 018 331
- WO-A1-81/02325
- DE-A1-102005 053 495
- DE-A1-102015 220 326
- DE-A1-102017 121 754
- US-A- 2 605 752
- US-A- 3 983 882
- US-A1- 2013 000 743

## Beschreibung

Die Erfindung betrifft eine Vorrichtung zur Beimischung eines Fluids in eine Verbrennungsluft einer Brennkraftmaschine mit den Merkmalen aus dem Oberbegriff des Patentanspruchs 1.

Zum technischen Umfeld wird beispielsweise auf die Deutsche Patentschrift DE 100 26 695 C1 hingewiesen. Aus dieser Patentschrift sind ein Verfahren und eine Vorrichtung zur Wassergewinnung aus einem Abgassystem bekannt. Es werden ein Verfahren und eine Vorrichtung zur Erzeugung von einer erforderlichen Menge Wasser durch Kondensation von dem im Abgas enthaltenen Wasserdampf beschrieben, insbesondere für eine Wassereinspritzanlage der Verbrennungskraftmaschine. Hierbei wird das kondensierte Wasser mit einer Leitungsanordnung geführt und in einem Behälter gespeichert. Erfindungsgemäß wird die erforderliche Menge Wasser mittels einer Kondensationsvorrichtung aus dem Abgas auskondensiert, die über den gesamten Betriebsbereich der Verbrennungskraftmaschine einen mittleren Kondensationswirkungsgrad von mindestens 25%, bevorzugt mindestens 50% aufweist. Auf diese Weise wird eine Bereitstellung von zusätzlichem Wasser in einem separaten und nachfüllbaren Tank vermieden und trotzdem eine dauerhafte Wassergewinnung aus dem Abgas ermöglicht. Weiter ist aus der Europäischen Patentschrift EP 2 789 839 B1 ein Verfahren zur Wassereinspritzung für eine Verbrennungskraftmaschine bekannt, bei dem nur in bestimmten Lastbereichen der Verbrennungskraftmaschine Wasser über erste Injektoren in die Brennkammern der Verbrennungskraftmaschinen eingespritzt wird. So wird Kraftstoff abhängig vom Lastbereich entweder über die ersten Injektoren direkt in die Brennkammern der Verbrennungskraftmaschine oder über zweite Injektoren in ein Saugrohr stromaufwärts der Brennkammern eingespritzt. In einem dritten Lastbereich der in einem mittleren Drehzahlbereich im Wesentlichen bei Volllast liegt, wird Wasser über die ersten Injektoren in die Brennkammern eingespritzt und Kraftstoff ausschließlich über die zweiten Injektoren in das Saugrohr eingespritzt.

Zum technischen Umfeld wird weiter auf die europäische Patentschrift EP 2 778 381 B1 hingewiesen. Aus dieser ist ein Verfahren zum Betreiben eines Einspritzsystems zum Einspritzen von Wasser in einen Einspritzbereich einer Verbrennungskraftmaschine mittels eines Injektors mit einem in einem Normalbetrieb der Verbrennungskraftmaschine wassergefüllten Arbeitsraum bekannt. Das Verfahren ist dadurch gekennzeichnet, dass beim Abschalten der Verbrennungskraftmaschine wenigstens ein Teil des im Arbeitsraum des Injektors vorhandenen Wassers durch eine aus der Brennkammer der Verbrennungskraftmaschine in den Arbeitsraum einströmendes Gasgemisch verdrängt und der Arbeitsraum wenigstens teilweise mit dem Gasgemisch gefüllt wird.

Weiter ist aus der europäischen Patentanmeldung EP 3 023 619 A1, von der die vorliegende Erfindung ausgeht, ein Verfahren zum Steuern einer Verbrennung in einer Brennkraftmaschine mit wenigstens einem Zylinder bekannt, wobei das Verfahren folgende Schritte aufweist:
- Erfassen einer Klopfstärke in dem Zylinder mittels eines Klopfsensors,
- Einstellen eines einer Soll-Abgastemperatur entsprechenden vorbestimmten Soll-Zündwinkels des Zylinders und
- Steuern einer Fluidbeimischung in den Zylinder in Abhängigkeit von der erfassten Klopfstärke.

Aus Platzgründen ist die Unterbringung eines Fluidtankes im warmen Fahrzeuginneren aus Platzmangel und Akkustikkomfortgründen nicht umsetzbar. Eine ausreichende Größe des Fluidbehälters bzw. des Wassertanks ist derzeit nur im Fahrzeugheck darstellbar, im Motorraum ist meist kein Platz mehr vorhanden. Darüber hinaus kann sich aufgrund eines nicht vorhandenen Heizsystems im Fahrzeugheck in nachteiliger Weise Eis im Tank bilden und nicht aufgetaut werden und darüber hinaus kann eine Biokontamination (z. B. die Vermehrung von Bakterien) nicht beseitigt werden. Andere Einspritzsysteme sind bekannt aus US 3 983 882 A, US 2 605 752 A und US 2013/000743 A1.

Aufgabe der vorliegenden Erfindung ist es, oben genannte Nachteile zu vermeiden.

Diese Aufgabe wird durch die Merkmale im kennzeichnenden Teil des Patentanspruchs 1 gelöst.

Erfindungsgemäß wird eine räumliche Trennung und Aufteilung des maximal benötigten Tankvolumens in zwei Tanks vorgeschlagen, die über eine Leitung und eine Pumpe miteinander verbunden sind.

Vorteilhafte Weiterbildungen der Erfindung sind in den Unteransprüchen beschrieben.

So wird weiter gemäß Patentanspruch 2 vorgeschlagen, dass der erste Fluidbehälter von einem Kühlmittel der Brennkraftmaschine über einen ersten Wärmetauscher und/oder elektrisch beheizbar ist.

In einer Weiterbildung ist auch der zweite Fluidbehälter, gemäß Patentanspruch 3 über einen zweiten Wärmetauscher elektrisch beheizbar. Dies kann mit relativ geringer Leistung erfolgen, da die Fluidvolumina auf zwei Fluidbehälter aufgeteilt sind.

Erfindungsgemäss weist der erste Fluidbehälter ein kleineres Volumen auf als der zweite Fluidbehälter, durch diese Maßnahme ist der erste Fluidbehälter noch schneller aufheizbar als der zweite Fluidbehälter.

Erfindungsgemäss wird der erste Fluidbehälter in einem Brennkraftmaschinenraum (Motorraum) des Kraftfahrzeugs angeordnet, was in vorteilhafter Weise zu kurzen Kühlmittel- oder je nach Aufheizmethode zu kurzen elektrischen Leitungen führt.

Um das Fluid zwischen den Tanks bedarfsgerecht zu verteilen, ist das Fluid erfindungsgemäss mit der Fluidpumpe bidirektional förderbar.

In einer vorteilhaften Weiterbildung verfügt der zweite Fluidbehälter gemäß Patentanspruch 4 über eine Befüllvorrichtung für das Fluid, damit bei Bedarf Fluid bzw. Wasser manuell aufgefüllt oder nachgefüllt werden kann.

Damit sich im ersten Fluidbehälter keine Fluid verdrängende Luft ansammeln kann, verfügt der erste Fluidbehälter gemäß Patentanspruch 5 bevorzugt über eine Entlüftungsvorrichtung.

Es wird somit eine räumliche Trennung des benötigten Tankbehältervolumens in zwei Fluidbehälter vorgeschlagen, von denen der eine, der kleinere im Motorraum verbaut und mit den Kühlwasserleitungen und / oder auch elektrisch beheizt wird. Der zweite, der größere Fluidbehälter ist im Fahrzeugheck verbaut und bevorzugt nur elektrisch beheizt. Die zur Verfügung stehende elektrische Heizung ist aufgrund von Bordnetzrestriktionen deutlich geringer als die Heizung durch das Kühlwasser. Die zwei Fluidbehälter werden durch eine Transferpumpe über eine Leitung durch das Fahrzeug verbunden.

Die Erfindung ermöglicht es in vorteilhafter Weise, das kleinere Fluidvolumen im Motorraum schnell zu erwärmen und somit das Fluideinspritzsystem (Wassereinspritzsystem) auch bei kalten und sehr kalten Außentemperaturen schnell verfügbar zu machen. Auch ist die Dekontamination von beispielsweise bakterieller Belastung durch Erhitzen des Fluids auf über 70°C möglich. Der zweite Tank, bzw. das zweite, größere Fluidvolumen im Fahrzeugheck ermöglicht die Darstellung des benötigten Gesamtfluidvolumens. Der hintere, größere Fluidbehälter kann nur langsam elektrisch erwärmt werden, durch die Transferpumpe kann aber ein Austausch zwischen den Fluidbehältern stattfinden. Sobald der hintere Fluidbehälter aufgetaut ist, steht wieder die gesamte mitgeführte Fluidmenge bzw. Wassermenge zur Einspritzung zur Verfügung.

Im Folgenden ist die Erfindung anhand eines Ausführungsbeispiels in einer einzigen Figur näher erläutert.

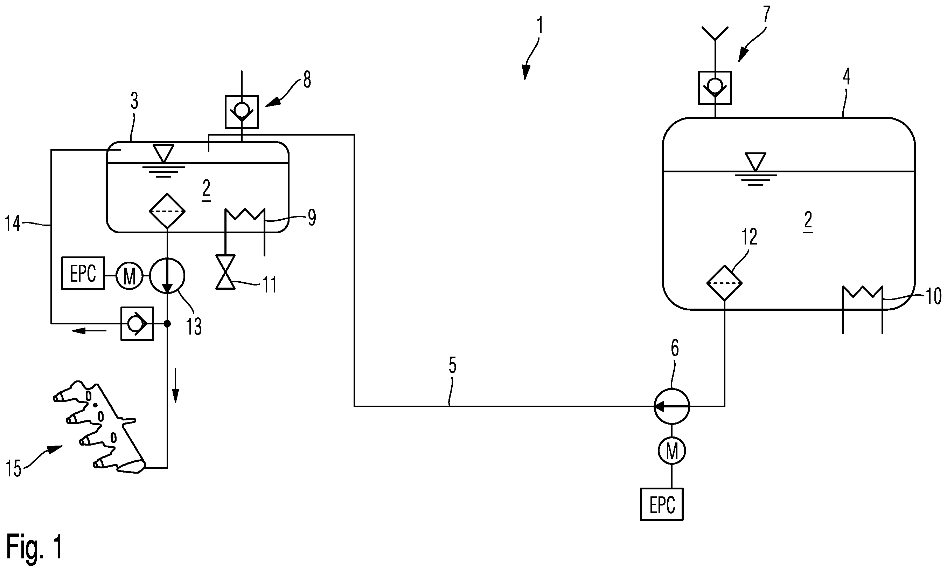

- Figur 1: zeigt eine Schemadarstellung einer erfindungsgemäßen Vorrichtung zur Beimischung eines Fluids in eine Verbrennungsluft einer Brennkraftmaschine.

Figur 1 zeigt schematisch eine Vorrichtung 1 zur Beimischung eines Fluids 2 in eine Verbrennungsluft einer nicht dargestellten Brennkraftmaschine für ein ebenfalls nicht dargestelltes Kraftfahrzeug. Die Vorrichtung 1 weist einen ersten Fluidbehälter 3 auf, aus dem das Fluid 2, vorzugsweise Wasser, entnehmbar und der Verbrennungsluft zuführbar ist. Ein Pegelstand des Fluids 2 ist im ersten Fluidbehälter 3 mit einem Dreieck gekennzeichnet. Das Fluid 2 ist über eine zweite Fluidpumpe 13 in eine Einspritzvorrichtung 15 zur Beimischung des Fluids in die Verbrennungsluft förderbar. Eine Strömungsrichtung des Fluids ist mittels Pfeilen dargestellt. Die zweite Fluidpumpe 13 ist in diesem Ausführungsbeispiel elektromotorisch betrieben und wird von einem nicht bezifferten elektronischen Steuergerät (EPC) angesteuert.

Über einen Rücklauf 14, in dem ein nicht beziffertes Rückschlagventil angeordnet ist, ist überflüssiges Fluid in den ersten Fluidbehälter 3 rückführbar. Weiter ist der erste Fluidbehälter 3 von einem Kühlmittel der Brennkraftmaschine über einen ersten Wärmetauscher 9 und/oder elektrisch (nicht dargestellt) beheizbar. Eine Kühlmittelmenge zum Beheizen des ersten Fluidbehälters 3 wird über ein Ventil 11 eingestellt. Eine Heizleistung des Kühlmittels, beispielsweise aus dem Heizungsrücklauf, beträgt ca. zwischen 1 und 6 kW. Weiter ist für den ersten Fluidbehälter 3 eine Entlüftungsvorrichtung 8 vorgesehen, um beim Befüllen des ersten Fluidbehälters 3 Fluid verdrängendes Gas entweichen zu lassen.

Erfindungsgemäß ist ein zweiter Fluidbehälter 4 vorgesehen, der mit dem ersten Fluidbehälter 3 über eine Leitung 5 Fluid führend verbindbar ist wobei in der Leitung 5 eine erste Fluidpumpe 6 angeordnet ist. Mit dieser Fluidpumpe 6 ist das Fluid 2 bidirektional förderbar, um einen Fluidaustausch zwischen dem ersten Fluidbehälter 3 und dem zweiten Fluidbehälter 4 gewährleisten zu können. Auch die erste Fluidpumpe 6 ist elektromotorisch betrieben und wird von dem nicht bezifferten elektronischen Steuergerät (EPC) angesteuert. Auch im zweiten Fluidbehälter 4 ist ein Pegelstand des Fluids durch ein Dreieck dargestellt. Bevorzugt ist der zweite Fluidbehälter 4 über einen zweiten Wärmetauscher 10 rein elektrisch beheizbar. Eine elektrische Heizleistung liegt bevorzugt in einem Bereich zwischen 80 und 800 W. Darüber hinaus weist der erste Fluidbehälter 3 ein kleineres Volumen als der zweite Fluidbehälter 4 auf.

Um Kontaminationen im zweiten Fluidbehälter 4 nicht in den ersten Fluidbehälter 3 zu übertragen ist im Inneren des zweiten Fluidbehälters 4 vorzugsweise ein Filter 12 vorgesehen. Zum manuellen Nachfüllen des Fluids in den zweiten Fluidbehälter 4 ist eine Befüllvorrichtung 7 mit einem nicht bezifferten Rückschlagventil vorgesehen.

Für kurze Kühlmittelleitungen ist der erste Fluidbehälter 3 in einem Brennkraftmaschinenraum (Motorraum) des Kraftfahrzeuges angeordnet und somit, nahe an der Brennkraftmaschine und der zweite Fluidbehälter 4 im Fahrzeugheck angeordnet, wo ihm ausreichend Bauraum zur Verfügung steht.

### BEZUGSZEICHENLISTE

- 1.: Vorrichtung
- 2.: Fluid
- 3.: erster Fluidbehälter
- 4.: zweiter Fluidbehälter
- 5.: Leitung
- 6.: erste Fluidpumpe
- 7.: Befüllvorrichtung
- 8.: Entlüftungsvorrichtung
- 9.: erster Wärmetauscher
- 10.: zweiter Wärmetauscher
- 11.: Ventil
- 12.: Filter
- 13.: zweite Fluidpumpe
- 14.: Rücklauf
- 15.: Einspritzvorrichtung

## Patentansprüche

1. Kraftfahrzeug, umfassend eine Vorrichtung (1) zur Beimischung eines Fluids (2) in eine Verbrennungsluft einer Brennkraftmaschine, mit einem ersten Fluidbehälter (3) aus dem das Fluid (2) entnehmbar und der Verbrennungsluft zuführbar ist, wobei ein zweiter Fluidbehälter (4) vorgesehen ist, der mit dem ersten Fluidbehälter (3) über eine Leitung (5) Fluid führend verbunden ist, wobei in der Leitung (5) eine erste Fluidpumpe (6) angeordnet ist,
wobei der erste Fluidbehälter (3) ein kleineres Volumen als der zweite Fluidbehälter (4) aufweist und wobei der erste Fluidbehälter (3) in einem Brennkraftmaschinenraum des Kraftfahrzeuges angeordnet ist und wobei der zweite Fluidbehälter (4) in einem von dem Motorraum verschiedenen Fahrzeugheck angeordnet ist, wobei das Fluid (2) über eine zweite Fluidpumpe (13) in eine Einspritzvorrichtung (15) zur Beimischung des Fluids (2) in die Verbrennungsluft förderbar ist, **dadurch gekennzeichnet, dass** das Fluid (2) mit der ersten Fluidpumpe (6) bidirektional förderbar ist.

2. Kraftfahrzeug nach Patentanspruch 1, wobei die Brennkraftmaschine von einem Kühlmittel gekühlt ist,
**dadurch gekennzeichnet, dass** der erste Fluidbehälter (3) von einem Kühlmittel der Brennkraftmaschine über einen ersten Wärmetauscher (9) und/oder elektrisch beheizbar ist.

3. Kraftfahrzeug nach Patentanspruch 1 oder 2,
**dadurch gekennzeichnet, dass** der zweite Fluidbehälter (4) über einen zweiten Wärmetauscher (10) elektrisch beheizbar ist.

4. Kraftfahrzeug nach einem der Patentansprüche 1 bis 3,
**dadurch gekennzeichnet, dass** der zweite Fluidbehälter (4) eine Befüllvorrichtung (7) für das Fluid aufweist.

5. Kraftfahrzeug nach einem der Patentansprüche 1 bis 4,
**dadurch gekennzeichnet, dass** der erste Fluidbehälter (3) eine Entlüftungsvorrichtung (8) aufweist.

## Claims

1. Motor vehicle comprising a device (1) for admixing a fluid (2) into a combustion air of an internal combustion engine, having a first fluid container (3) from which the fluid (2) is able to be removed and is able to be fed to the combustion air, wherein provision is made of a second fluid container (4) which is connected in a fluid-conducting manner to the first fluid container (3) via a line (5), wherein a first fluid pump (6) is arranged in the line (5), wherein the first fluid container (3) has a smaller volume than the second fluid container (4), and wherein the first fluid container (3) is arranged in an internal-combustion-engine compartment of the motor vehicle, and wherein the second fluid container (4) is arranged in a rear end, different from the engine compartment, of the vehicle, wherein the fluid (2) is able to be conveyed via a second fluid pump (13) into an injection device (15) for admixing the fluid (2) into the combustion air, **characterized in that** the fluid (2) is able to be conveyed bidirectionally by way of the first fluid pump (6).

2. Motor vehicle according to Patent Claim 1, wherein the internal combustion engine is cooled by a coolant,
**characterized in that** the first fluid container (3) is able to be heated by a coolant of the internal combustion engine via a first heat exchanger (9) and/or electrically.

3. Motor vehicle according to Patent Claim 1 or 2, **characterized in that** the second fluid container (4) is able to be heated electrically via a second heat exchanger (10).

4. Motor vehicle according to one of Patent Claims 1 to 3,
**characterized in that** the second fluid container (4) has a filling device (7) for the fluid.

5. Motor vehicle according to one of Patent Claims 1 to 4,
**characterized in that** the first fluid container (3) has a venting device (8).

## Revendications

1. Véhicule automobile, comprenant un dispositif (1) pour ajouter un fluide (2) à l'air de combustion d'un moteur à combustion interne, comprenant un premier réservoir de fluide (3) duquel le fluide (2) peut être prélevé et amené à l'air de combustion, dans lequel un deuxième réservoir de fluide (4) est prévu qui est en communication fluidique avec le premier réservoir de fluide (3) par l'intermédiaire d'une conduite (5), dans lequel une première pompe à fluide (6) est disposée dans la conduite (5), dans lequel le premier réservoir de fluide (3) présente un volume inférieur au deuxième réservoir de fluide (4), et dans lequel le premier réservoir de fluide (3) est disposé dans un compartiment du moteur à combustion interne du véhicule automobile, et dans lequel le deuxième réservoir de fluide (4) est disposé dans un hayon de véhicule différent du compartiment moteur, dans lequel le fluide (2) peut être débité par une deuxième pompe à fluide (13) dans un dispositif d'injection (15) pour ajouter le fluide (2) à l'air de combustion,
**caractérisé en ce que** le fluide (2) peut être débité dans les deux sens par la première pompe à fluide (6).

2. Véhicule automobile selon la revendication 1, dans lequel le moteur à combustion interne est refroidi par un liquide de refroidissement,
**caractérisé en ce que** le premier réservoir de fluide (3) peut être chauffé par un liquide de refroidissement du moteur à combustion interne par l'intermédiaire d'un premier échangeur thermique (9) et/ou de manière électrique.

3. Véhicule automobile selon la revendication 1 ou 2, **caractérisé en ce que** le deuxième réservoir de fluide (4) peut être chauffé de manière électrique par un deuxième échangeur thermique (10).

4. Véhicule automobile selon l'une quelconque des revendications 1 à 3, **caractérisé en ce que** le deuxième réservoir de fluide (4) présente un dispositif de remplissage (7) pour le fluide.

5. Véhicule automobile selon l'une quelconque des revendications 1 à 4, **caractérisé en ce que** le premier réservoir de fluide (3) présente un dispositif de purge (8) .
